# EUROPÄISCHE PATENTANMELDUNG

(11) **EP 4 597 368 A1**
(43) Veröffentlichungstag der Anmeldung: **06.08.2025**
(21) Anmeldenummer: 24154592.0
(22) Anmeldetag: 30.01.2024
(51) Int. Cl.: G06N 3/0455, G06N 3/0475, G06N 3/088

(54) **VERFAHREN ZUR BESTIMMUNG EINER TECHNISCHEN EIGENSCHAFT EINES GEGENSTANDES**

(71) Anmelder: Continental Reifen Deutschland GmbH, 30175 Hannover (DE)
(72) Erfinder: Trujillo Martinez, Mauricio, 30175 Hannover (DE); Aslan, Valid, 30175 Hannover (DE); Kiani, Amin, 30175 Hannover (DE); Cunha, Gilberto, 4050-478 Porto (PT)
(74) Vertreter: Continental Corporation

(57) **Zusammenfassung**

Die Erfindung betrifft ein Verfahren zur Bestimmung einer technischen Eigenschaft eines Gegenstands (9), aufweisend die folgenden Schritte:
Bereitstellen einer Vorrichtung (2) mit einem künstlichen neuronalen Netz (3), aufweisend eine Eingabeschicht (4) und eine Ausgabeschicht (5).

## Beschreibung

Die Erfindung betrifft ein Verfahren zur Bestimmung einer technischen Eigenschaft eines Gegenstandes.

Die Erfindung betrifft ferner ein System, wobei das System zur Durchführung des erfindungsgemäßen Verfahrens geeignet ist.

Die Erfindung geht aus von einem Verfahren zur Bestimmung einer technischen Eigenschaft eines Gegenstands. Bei dem Gegenstand kann es sich beispielsweise um einen Kühlschrank oder um ein Teleskop oder um ein Handtuch oder um einen Radiowecker oder um einen Fahrradhelm oder um einen Tisch handeln.

Der Gegenstand kann physikalisch und/oder chemisch und/oder geometrisch beschrieben werden.

Es kann sich bei dem Gegenstand beispielsweise auch um ein Halbzeug handeln. Bei der technischen Eigenschaft des Gegenstands kann es sich beispielsweise um eine mechanische oder physikalische Eigenschaft eines Bestandteils des Gegenstands oder des gesamten Gegenstands handeln. Bei der technischen Eigenschaft kann es sich ferner um eine chemische Eigenschaft des Gegenstands handeln, insbesondere um eine chemische Zusammensetzung von Bestandteilen des Gegenstands.

Das Verfahren weist die folgenden Schritte auf:
- Bereitstellen einer Vorrichtung mit einem künstlichen neuronalen Netz, aufweisend eine Eingabeschicht und eine Ausgabeschicht;
- Bereitstellen von Eingangsdaten, wobei es sich bei den Eingangsdaten um technische Daten eines Gegenstands handelt;
- Übertragung der Eingangsdaten in die Eingabeschicht, beispielsweise mittels einer Übertragungseinheit;
- Komprimieren der Eingangsdaten mittels der Vorrichtung mit einem künstlichen neuronalen Netz und Erzeugen eines kondensierten Datensatzes in Abhängigkeit der Eingangsdaten mittels der Vorrichtung mit einem künstlichen neuronalen Netz;
- Dekomprimieren des kondensierten Datensatzes mittels der Vorrichtung mit einem künstlichen neuronalen Netz und Erzeugen von Ausgangsdaten mittels der Vorrichtung mit einem künstlichen neuronalen Netz;
- Bereitstellen einer Auswertevorrichtung, wobei die Auswertevorrichtung zu einem Vergleichen der Eingangsdaten mit den Ausgangsdaten vorgesehen ist;
- Vergleichen der Eingangsdaten mit den Ausgangsdaten mittels der Auswertevorrichtung;
- Bereitstellen einer Verarbeitungsvorrichtung, wobei die Verarbeitungsvorrichtung zur Verarbeitung des kondensierten Datensatzes vorgesehen ist;
- Übertragen des kondensierten Datensatzes mittels einer Übertragungsvorrichtung von der Vorrichtung mit einem künstlichen neuronalen Netz an die Verarbeitungsvorrichtung für den Fall, wonach die Eingangsdaten und die Ausgangsdaten ausreichend identisch sind.

Bei der Vorrichtung mit einem künstlichen neuronalen Netz handelt es sich insbesondere um eine Computervorrichtung mit einem künstlichen neuronalen Netz und beispielsweise um einen Autoencoder.

Die Eingangsdaten werden insbesondere in Form einer Eingangsdatenmatrix oder insbesondere in Form einer Tabelle bereitgestellt. Bei den Eingangsdaten handelt es sich um elektronisch, elektrisch und/oder mittels eines Computers verarbeitbare Daten.

Die Ausgangsdaten werden insbesondere in Form einer Ausgangsdatenmatrix oder insbesondere in Form einer Tabelle bereitgestellt oder erzeigt. Bei den Ausgangsdaten handelt es sich um elektronisch, elektrisch und/oder mittels eines Computers verarbeitbare Daten.

Bei der Übertragungseinheit zur Übertragung der Eingangsdaten in die Eingabeschicht handelt es sich insbesondere um eine elektrisch oder elektromagnetisch wirkende Vorrichtung oder um eine Computervorrichtung, die geeignet ist, Daten zu übertragen.

Bei den technischen Daten des Gegenstands handelt es sich beispielsweise um Informationen und/oder um Metainformationen. Die Informationen betreffen die technische Ausgestaltung des Gegenstands selbst und die Metainformationen betreffen die technische Nutzung des Gegenstands.

Die Informationen betreffen beispielsweise eine Geometrie des Gegenstands, Abmessungen des Gegenstands, eine chemische Zusammensetzung der Bestandteile des Gegenstands und/oder eine chemische oder physikalische Eigenschaft des Gegenstands. Bei den Metainformationen handelt es sich beispielsweise um Informationen darüber, auf welche Art und Weise und unter welchen Umständen der Gegenstand genutzt werden soll.

Der Verfahrensschritt des Komprimierens der Eingangsdaten mittels der Vorrichtung mit einem künstlichen neuronalen Netz kann als Encoding bezeichnet werden. Ziel des Komprimierens ist insbesondere ein verlustfreies Komprimieren der Eingangsdaten, also das Vermeiden eines Verlustes von Eingangsdaten und von Information der Eingangsdaten während des Komprimierens. Das Dekomprimieren kann beispielsweise als Decoding bezeichnet werden.

Die Auswertevorrichtung kann insbesondere Bestandteil der Vorrichtung mit einem künstlichen neuronalen Netz selbst sein. Es kann sich alternativ bei der Auswertevorrichtung um eine bezüglich der Vorrichtung mit einem künstlichen neuronalen Netz externe Vorrichtung und insbesondere um eine bezüglich der Vorrichtung mit einem künstlichen neuronalen Netz externe Computervorrichtung, handeln.

Eine ausreichende Identität zwischen Eingangsdaten und Ausgangsdaten liegt beispielsweise dann vor, wenn mindestens 99 % der Information der Eingangsdaten in den Ausgangsdaten enthalten ist. Ziel ist insbesondere eine absolute Identität zwischen Eingangsdaten und Ausgangsdaten, was mit einer verlustfreien Komprimierung und Dekomprimierung einhergeht. Eine verlustfreie Komprimierung und Dekomprimierung liegt vor, wenn 100 % der Information der Eingangsdaten in den Ausgangsdaten enthalten ist.

Der Grad der Genauigkeit an Übereinstimmung zwischen Eingangsdaten und Ausgangsdaten, also insbesondere der prozentuale Anteil an der Information der Eingangsdaten die in den Ausgangsdaten enthalten ist, kann beispielsweise mittels eines mathematischen Abweichungstests bestimmt werden.

Aus dem Stand der Technik sind Verfahren zur Bestimmung einer technischen Eigenschaft eines Gegenstands bekannt. Dabei ist es aus dem Stand der Technik auch bekannt, dass das Verfahren die zuvor genannten Schritte aufweist.

Die aus dem Stand der Technik bekannten Verfahren zur Bestimmung einer technischen Eigenschaft eines Gegenstands könnten mit einer nicht optimalen Nutzung einer Computervorrichtung, mittels der das Verfahren durchgeführt wird, einhergehen. Hintergrund ist, dass beispielsweise eine Auswertung des kondensierten Datensatzes mit einer vergleichsweise hohen erforderlichen Rechenleistung der Computervorrichtung und einem vergleichsweisen hohen erforderlichen Speicherplatz in der Computervorrichtung einhergehen könnte.

Es ist daher Aufgabe der vorliegenden Erfindung, ein Verfahren zur Bestimmung einer technischen Eigenschaft eines Gegenstands bereitzustellen, wobei die Durchführung des Verfahrens auf und mittels einer Computervorrichtung besser ausgestaltet ist.

Gelöst wird die erfindungsgemäß gestellte Aufgabe dadurch, dass das Verfahren durch die weiteren Schritte gekennzeichnet ist:
- Darstellen des kondensierten Datensatzes in einem reellen Vektorraum mittels der Verarbeitungsvorrichtung;
- Zuordnen von einer ersten Vektorgruppe in dem reellen Vektorraum zu einem ersten technischen Gegenstandstyp mittels der Verarbeitungsvorrichtung;
- Zuordnen von einer zweiten Vektorgruppe in dem reellen Vektorraum zu einem zweiten technischen Gegenstandstyp mittels der Verarbeitungsvorrichtung;
- Bestimmen einer dritten Vektorgruppe in dem reellen Vektorraum zu einem dritten technischen Gegenstandstyp in Abhängigkeit der ersten Vektorgruppe und der zweiten Vektorgruppe mittels der Verarbeitungsvorrichtung.

Bei der Verarbeitungsvorrichtung kann es sich beispielsweise um eine Computervorrichtung handeln.

Durch den erfindungsgemäßen Umstand, wonach das Verfahren durch die folgenden weiteren Schritte gekennzeichnet ist:
- Darstellen des kondensierten Datensatzes in einem reellen Vektorraum mittels der Verarbeitungsvorrichtung;
- Zuordnen von einer ersten Vektorgruppe in dem reellen Vektorraum zu einem ersten technischen Gegenstandstyp mittels der Verarbeitungsvorrichtung;
- Zuordnen von einer zweiten Vektorgruppe in dem reellen Vektorraum zu einem zweiten technischen Gegenstandstyp mittels der Verarbeitungsvorrichtung;
- Bestimmen einer dritten Vektorgruppe in dem reellen Vektorraum zu einem dritten technischen Gegenstandstyp in Abhängigkeit der ersten Vektorgruppe und der zweiten Vektorgruppe mittels der Verarbeitungsvorrichtung,
wird ein schnelleres Berechnen von Eigenschaften in Form einer dritten Vektorgruppe ermöglicht. Hintergrund ist, dass eine Berechnung in einem Vektorraum beispielsweise mittels trivialer Vektorrechnung, vorzugsweise im Rahmen der linearen Algebra vorgenommen werden kann. Triviale Vektorrechnungen, insbesondere solche der linearen Algebra, können mit Blick auf einen Arbeitsspeicher einer Computervorrichtung günstig und aufwandsarm mittels einer Computervorrichtung durchgeführt werden. Somit kann eine effiziente Nutzung einer Computervorrichtung zur Bestimmung technischer Eigenschaften eines theoretischen Gegenstands durchgeführt werden. Eine Verarbeitungsvorrichtung und beispielswiese eine Computervorrichtung und insbesondere eine zentrale Prozessoreinheit der Verarbeitungsvorrichtung oder der Computervorrichtung werden somit weniger ausgelastet.

Bei einem technischen Gegenstandstyp kann es sich um einen theoretischen oder tatsächlichen Gegenstand handeln. Es kann sich beispielsweise bei dem ersten technischen Gegenstandstyp und/oder dem zweiten technischen Gegenstandstyp um einen tatsächlich existierenden oder um einen theoretisch möglichen Gegenstandstyp handeln. Vorzugsweise kann es kann sich also bei dem ersten technischen Gegenstandstyp und/oder dem zweiten technischen Gegenstandstyp um einen tatsächlich existierenden oder um einen theoretisch möglichen Gegenstand handeln. Bei dem dritten technischen Gegenstandstyp kann es sich auch um einen theoretisch möglichen Gegenstandstyp und somit insbesondere um einen theoretisch möglichen Gegenstand handeln. Mittels des erfindungsgemäßen Verfahrens kann somit beispielsweise ein theoretischer, noch nicht real existierender Gegenstand, beispielsweise anhand einer Linearkombination von Vektoren, die technische Eigenschaften bereits existierender Gegenstände repräsentieren, beschrieben und deren technische Eigenschaften berechnet werden. Entsprechend ist eine computergestützte Vorhersage von Eigenschaften des theoretischen Gegenstands möglich. Eine Berechnung von technischen Eigenschaften eines theoretischen Gegenstands führt insbesondere auch zu einer Erhöhung einer Nachhaltigkeit während einer Entwicklung von Gegenständen. Hintergrund ist, dass tatsächlich an einem Gegenstand zur Bestimmung seiner technischen Eigenschaften durchzuführende Untersuchungen entfallen. Ferner können insbesondere Produktportfolien von Gegenständen zusammengefasst und unbrauchbare Produkte der Produktportfolien vermieden werden. Hintergrund ist, dass eine maximale Anzahl an Elementen des Produktportfolios genügt, um einen theoretischen Gegenstand zu bestimmen und zu untersuchen. Basierend auf bereits durchgeführten Messungen und Informationen über einen Gegenstand wird somit insgesamt weniger reales Experimentieren an einem Gegenstand erforderlich. Ein geringeres reales Experimentieren geht mit einem geringeren Energieverbrauch einher.

Somit wird insgesamt ein verbessertes Verfahren zur Bestimmung einer technischen Eigenschaft eines Gegenstands bereitgestellt.

Die Erfindung betrifft ferner ein System, wobei das System zur Durchführung des erfindungsgemäßen Verfahrens geeignet ist. Bei dem System handelt es sich vorzugsweise um ein Computersystem. Das System weist insbesondere eine Vorrichtung mit einem künstlichen neuronalen Netz, aufweisend eine Eingabeschicht und eine Ausgabeschicht auf und eine Auswertevorrichtung, wobei die Auswertevorrichtung zu einem Vergleichen der Eingangsdaten mit den Ausgangsdaten vorgesehen ist, und eine Verarbeitungsvorrichtung, wobei die Verarbeitungsvorrichtung zur Verarbeitung des kondensierten Datensatzes vorgesehen ist, und eine Übertragungsvorrichtung, wobei die Übertragungsvorrichtung zur Übertragung des kondensierten Datensatzes von der Vorrichtung mit einem künstlichen neuronalen Netz an die Verarbeitungsvorrichtung vorgesehen ist. Die Übertragung erfolgt insbesondere mittels eines elektrischen oder elektronischen Signals, das eine Information über den kondensierten Datensatz enthält.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung weist das Verfahren für den Fall, wonach die Eingangsdaten und die Ausgangsdaten nicht identisch sind, die folgenden Schritte auf:
- Komprimieren der Eingangsdaten mittels der Vorrichtung mit einem künstlichen neuronalen Netz und Erzeugen eines kondensierten Datensatzes in Abhängigkeit der Eingangsdaten mittels der Vorrichtung mit einem künstlichen neuronalen Netz;
- Dekomprimieren des kondensierten Datensatzes mittels der Vorrichtung mit einem künstlichen neuronalen Netz und Erzeugen von Ausgangsdaten mittels der Vorrichtung mit einem künstlichen neuronalen Netz;
- Vergleichen der Eingangsdaten mit den Ausgangsdaten mittels der Auswertevorrichtung;
wiederholt werden, bis die Eingangsdaten und die Ausgangsdaten ausreichend identisch sind.

Gemäß einer weiteren vorzugsweisen Ausgestaltungsform der vorliegenden Erfindung handelt es sich bei den technischen Daten des Gegenstands um Daten zu Abmessungen des Gegenstands, Daten zu mindestens einer physikalischen Eigenschaft des Gegenstands, Daten zu mindestens einer chemischen Eigenschaft des Gegenstands und/oder Daten zu einer Konstruktion des Gegenstands.

Bei den Daten zu einer Konstruktion des Gegenstands handelt es sich beispielsweise für den Fall, wonach es sich bei dem Gegenstand um einen Gegenstand mit einem Festigkeitsträger handelt, um Informationen zu einer Art und Anwendung eines möglichen Festigkeitsträgers innerhalb des Gegenstands.

Gemäß einer nächsten vorzugsweisen Ausgestaltungsform der vorliegenden Erfindung handelt es sich bei den technischen Daten des Gegenstands um Daten zur Nutzung des Gegenstands.

Gemäß einer nächsten vorzugsweisen Ausgestaltungsform der vorliegenden Erfindung handelt es sich bei den technischen Daten des Gegenstands um sensorisch erfasste Daten.

Gemäß einer nächsten vorzugsweisen Ausgestaltungsform der vorliegenden Erfindung ist das erfindungsgemäße Verfahren gekennzeichnet durch die weiteren Schritte:
- Bereitstellen eines Gegenstands, wobei der Gegenstand dem dritten technischen Gegenstandstyp entspricht;
- Bereitstellen einer Messvorrichtung, wobei die Messvorrichtung zur physikalischen und/oder chemischen Untersuchung des Gegenstands vorgesehen ist;
- Untersuchen des Gegenstands mittels der Messvorrichtung;
- Erzeugen von Messdaten über den Gegenstand in Abhängigkeit des mittels der Messvorrichtung durchgeführten Untersuchens des Gegenstands;
- Erzeugen von theoretischen Daten über den dritten technischen Gegenstandstyp in Abhängigkeit der dritten Vektorgruppe;
- Zuordnen der theoretischen Daten zu den Messdaten;
- Erzeugen eines gemeinsamen Datensatzes, wobei der gemeinsame Datensatz die Messdaten über den Gegenstand und die diesen Messdaten zugeordneten theoretischen Daten enthält.

Weitere Vorteile, Merkmale und Einzelheiten, auf die die Erfindung in ihrem Umfang aber nicht beschränkt ist, werden nun anhand der Zeichnung näher beschrieben.

Es zeigt:

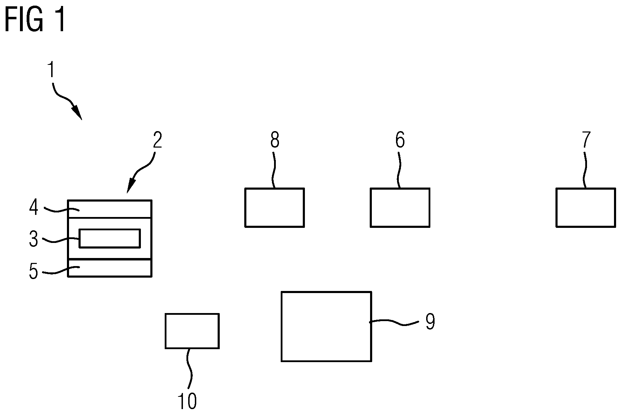

Fig. 1: Eine schematische Darstellung eines Systems.

In der Figur 1 ist ein erfindungsgemäßes System 1 schematisch dargestellt. Das System 1 ist zur Durchführung des erfindungsgemäßen Verfahrens zur Bestimmung einer technischen Eigenschaft eines Gegenstands 9 vorgesehen.

Das System 1 weist insbesondere eine Vorrichtung 2 mit einem künstlichen neuronalen Netz 3 auf, wobei das künstliche neuronale Netz 3 eine Eingabeschicht 4 und eine Ausgabeschicht 5 aufweist.

Das System weist ferner eine Auswertevorrichtung 6 auf, wobei die Auswertevorrichtung 6 zu einem Vergleichen der Eingangsdaten mit den Ausgangsdaten vorgesehen ist, und das System 1 weist eine Verarbeitungsvorrichtung 7 auf, wobei die Verarbeitungsvorrichtung 7 zur Verarbeitung des kondensierten Datensatzes vorgesehen ist, und das System 1 weist eine Übertragungsvorrichtung 8 auf, wobei die Übertragungsvorrichtung 8 zur Übertragung des kondensierten Datensatzes von der Vorrichtung 2 mit einem künstlichen neutralen Netz 3 an die Verarbeitungsvorrichtung 7 vorgesehen ist.

Insbesondere wird der Gegenstand 9 mit einer Messvorrichtung 10, wobei die Messvorrichtung 10 zur physikalischen und/oder chemischen Untersuchung der Gegenstand 9 vorgesehen ist, untersucht. In Abhängigkeit dieses Untersuchens können Messdaten über den Gegenstand 9 erzeugt werden.

### Bezugszeichenliste

- 1: System
- 2: Vorrichtung
- 3: Künstliches neuronales Netz
- 4: Eingabeschicht
- 5: Ausgabeschicht
- 6: Auswertevorrichtung
- 7: Verarbeitungsvorrichtung
- 8: Übertragungsvorrichtung
- 9: Gegenstand
- 10: Messvorrichtung

## Patentansprüche

1. Verfahren zur Bestimmung einer technischen Eigenschaft eines Gegenstands (9), aufweisend die folgenden Schritte:
- Bereitstellen einer Vorrichtung (2) mit einem künstlichen neuronalen Netz (3), aufweisend eine Eingabeschicht (4) und eine Ausgabeschicht (5);
- Bereitstellen von Eingangsdaten, wobei es sich bei den Eingangsdaten um technische Daten eines Gegenstands (9) handelt;
- Übertragen der Eingangsdaten in die Eingabeschicht (4);
- Komprimieren der Eingangsdaten mittels der Vorrichtung (2) mit einem künstlichen neuronalen Netz (3) und Erzeugen eines kondensierten Datensatzes in Abhängigkeit der Eingangsdaten mittels der Vorrichtung (2) mit einem künstlichen neuronalen Netz (3);
- Dekomprimieren des kondensierten Datensatzes mittels der Vorrichtung (2) mit einem künstlichen neuronalen Netz (3) und Erzeugen von Ausgangsdaten mittels der Vorrichtung (2) mit einem künstlichen neuronalen Netz (3);
- Bereitstellen einer Auswertevorrichtung (6), wobei die Auswertevorrichtung (6) zu einem Vergleichen der Eingangsdaten mit den Ausgangsdaten vorgesehen ist;
- Vergleichen der Eingangsdaten mit den Ausgangsdaten mittels der Auswertevorrichtung (6);
- Bereitstellen einer Verarbeitungsvorrichtung (7), wobei die Verarbeitungsvorrichtung (7) zur Verarbeitung des kondensierten Datensatzes vorgesehen ist;
- Übertragen des kondensierten Datensatzes mittels einer Übertragungsvorrichtung (8) von der Vorrichtung (2) mit einem künstlichen neuronalen Netz (3) an die Verarbeitungsvorrichtung (8) für den Fall, wonach die Eingangsdaten und die Ausgangsdaten ausreichend identisch sind;
**Gekennzeichnet durch die weiteren Schritte:**
- Darstellen des kondensierten Datensatzes in einem reellen Vektorraum mittels der Verarbeitungsvorrichtung (7);
- Zuordnen von einer ersten Vektorgruppe in dem reellen Vektorraum zu einem ersten technischen Gegenstandstyp mittels der Verarbeitungsvorrichtung (7);
- Zuordnen von einer zweiten Vektorgruppe in dem reellen Vektorraum zu einem zweiten technischen Gegenstandstyp mittels der Verarbeitungsvorrichtung (7);
- Bestimmen einer dritten Vektorgruppe in dem reellen Vektorraum zu einem dritten technischen Gegenstandstyp in Abhängigkeit der ersten Vektorgruppe und der zweiten Vektorgruppe mittels der Verarbeitungsvorrichtung (7).

2. Verfahren nach Anspruch 1, **dadurch gekennzeichnet, dass** für den Fall, wonach die Eingangsdaten und die Ausgangsdaten nicht ausreichend identisch sind, die Schritte:
- Komprimieren der Eingangsdaten mittels der Vorrichtung mit einem künstlichen neuronalen Netz und Erzeugen eines kondensierten Datensatzes in Abhängigkeit der Eingangsdaten mittels der Vorrichtung (2) mit einem künstlichen neuronalen Netz (3);
- Dekomprimieren des kondensierten Datensatzes mittels der Vorrichtung (2) mit einem künstlichen neuronalen Netz (3) und Erzeugen von Ausgangsdaten mittels der Vorrichtung (2) mit einem künstlichen neuronalen Netz (3);
- Vergleichen der Eingangsdaten mit den Ausgangsdaten mittels der Auswertevorrichtung (6);
wiederholt werden, bis die Eingangsdaten und die Ausgangsdaten ausreichend identisch sind.

3. Verfahren nach einem der vorhergehenden Ansprüche, **dadurch gekennzeichnet, dass** es sich bei den technischen Daten des Gegenstands (9) um Daten zu Abmessungen des Gegenstands (9), Daten zu mindestens einer physikalischen Eigenschaft des Gegenstands (9), Daten zu mindestens einer chemischen Eigenschaft des Gegenstands (9) und/oder zu einer Konstruktion des Gegenstands (9).

4. Verfahren nach einem der vorhergehenden Ansprüche, **dadurch gekennzeichnet, dass** es sich bei den technischen Daten des Gegenstands (9) um Daten zur Nutzung des Gegenstands (9) handelt.

5. Verfahren nach Anspruch 3 oder 4, **dadurch gekennzeichnet, dass** es sich bei den technischen Daten des Gegenstands (9) um sensorisch erfasste Daten handelt.

6. Verfahren nach einem der vorhergehenden Ansprüche **gekennzeichnet durch** die weiteren Schritte:
- Bereitstellen eines Gegenstands (9), wobei der Gegenstand (9) dem dritten technischen Gegenstandstyp entspricht;
- Bereitstellen einer Messvorrichtung (10), wobei die Messvorrichtung (10) zur physikalischen und/oder chemischen Untersuchung des Gegenstands (9) vorgesehen ist;
- Untersuchen des Gegenstands (9) mittels der Messvorrichtung (10);
- Erzeugen von Messdaten über den Gegenstand (9) in Abhängigkeit des mittels der Messvorrichtung (10) durchgeführten Untersuchens des Gegenstands (9);
- Erzeugen von theoretischen Daten über den dritten technischen Gegenstandstyp in Abhängigkeit der dritten Vektorgruppe;
- Zuordnen der theoretischen Daten zu den Messdaten;
- Erzeugen eines gemeinsamen Datensatzes, wobei der gemeinsame Datensatz die Messdaten über den Gegenstand (9) und die diesen Messdaten zugeordneten theoretischen Daten enthält.

7. System (1), geeignet zur Durchführung des Verfahrens gemäß einem der vorhergehenden Ansprüche, insbesondere aufweisend eine Vorrichtung (2) mit einem künstlichen neuronalen Netz (3), aufweisend eine Eingabeschicht (4) und eine Ausgabeschicht (5), und eine Auswertevorrichtung (6), wobei die Auswertevorrichtung (6) zu einem Vergleichen der Eingangsdaten mit den Ausgangsdaten vorgesehen ist, und eine Verarbeitungsvorrichtung (7), wobei die Verarbeitungsvorrichtung (7) zur Verarbeitung des kondensierten Datensatzes vorgesehen ist, und eine Übertragungsvorrichtung (8), wobei die Übertragungsvorrichtung (8) zur Übertragung des kondensierten Datensatzes von der Vorrichtung (2) mit einem künstlichen neuronalen Netz (3) an die Verarbeitungsvorrichtung (7) vorgesehen ist.
